# EUROPEAN PATENT SPECIFICATION

(11) **EP 1 795 771 B1**
(45) Date of publication and mention of the grant of the patent: **27.04.2011**
(21) Application number: 05780284.5
(22) Date of filing: 15.08.2005
(51) Int. Cl.: F16C 35/063, F16C 19/18, F16C 33/60, F16C 33/64, B60B 27/02, B60B 35/02, B60B 35/18

(54) **BEARING DEVICE FOR WHEEL**
LAGERVORRICHTUNG FÜR RAD
DISPOSITIF DE ROULEMENT POUR ROUE

(30) Priority: 16.08.2004 JP 2004236596
(43) Date of publication of application: 13.06.2007
(73) Proprietor: NTN Corporation, Osaka-shi, Osaka 550-0003 (JP)
(72) Inventor: KOMORI, Kazuo, c/o NTN Corporation, Iwata-shi, Shizuoka 438-8510 (JP); KIUCHI, Masahiro, c/o NTN Corporation, Iwata-shi, Shizuoka 438-8510 (JP); KUBOTA, Kazunori, c/o NTN Corporation, Iwata-shi, Shizuoka 438-8510 (JP); ARITAKE, Yasuhiro, c/o NTN Corporation, Iwata-shi, Shizuoka 438-8510 (JP); OWADA, Takayuki, c/o NTN Corporation, Iwata-shi, Shizuoka 438-8510 (JP)
(74) Representative: Thielmann, Andreas
(86) International application number: PCT/JP2005/014905
(87) International publication number: WO 2006/019071

(56) References cited:
- JP-A- 2003 246 203
- JP-A- 2004 090 839

## Description

### BACKGROUND OF THE INVENTION

### Field of the Invention

The present invention relates to a bearing apparatus for a wheel of vehicle for rotatably supporting a wheel of vehicle relative to a suspension system, and more particularly to a bearing apparatus for a wheel of vehicle which has an optimized amount of axial deformation of an inner ring caused by caulking process and thus can assure the axial force and fastening strength in order to improve the strength and rigidity of the bearing apparatus.

### Description of background Art

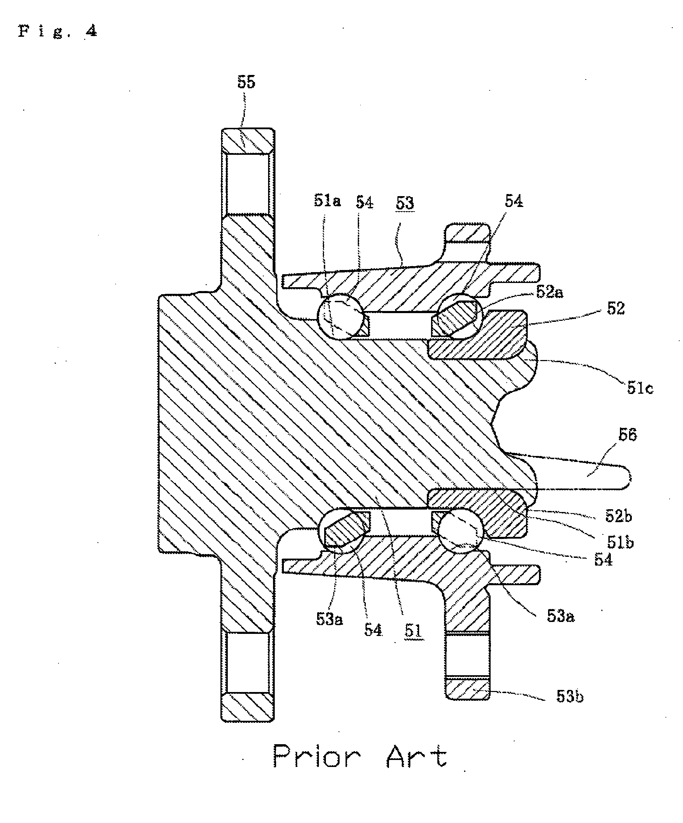

There are two types of bearing apparatus for a wheel of vehicle e.g. such as those for a driving wheel and a driven wheel and improvements in reduction of manufacturing cost and reduction of weight and size for improving fuel consumption have been achieved. One representative example of such a bearing apparatus of the prior art is shown in Fig. 4.

The bearing apparatus of a wheel of vehicle of Fig. 4 is the so-called a third generation type and has an axial member (hub wheel) 51, an inner ring 52, an outer ring 53, and double row rolling elements (balls) 54, 54. The axial member 51 has a wheel mounting flange 55 for mounting a wheel (not shown) formed integrally therewith at one end thereof, an inner raceway surface 51a formed on its outer circumferential surface, and a cylindrical portion 51b axially extending from the inner raceway surface 51a.

The inner ring 52 is press-fitted on the cylindrical portion 51b of the axial member 51 and is formed on its outer circumferential surface with an inner raceway surface 52a. The inner ring 52 is prevented from being axially slipped off from the cylindrical portion 51b of the hub wheel 51 by a caulked portion 51c formed by deforming the end of the cylindrical portion 51b of the hub wheel 51 radially outward.

The outer ring 53 has a body mounting flange 53b integrally formed therewith and double row outer raceway surfaces 53a, 53a formed on the inner circumferential surface. The double row rolling elements 54, 54 are contained freely rollably between the double row outer raceway surface 53a, 53a and the inner raceway surfaces 51a, 52a arranged oppositely to the outer raceway surfaces 53a, 53a.

The thickness of cylindrical projection 56 (shown by a phantom line in Fig. 4) forming a caulked portion 51c is gradually reduced toward its tip before it being caulked radially outward. Accordingly the thickness of the caulked portion 51c pressing a larger end face 52b of the inner ring is also gradually reduced toward its tip.

Since the caulked portion 51c can be formed by plastically deforming the tip of the cylindrical projection 56 with using a caulking punch, any excessive pressing force is not required. Accordingly it is possible to prevent generation of cracks or damages in the caulked portion 51c during caulking process and to prevent excessive enlargement of the inner diameter of inner ring 52 which would give influence to pre-pressure and durability in rolling fatigue.
(see Japanese Laid-open Patent Publication No. 272903/1998).

### Disclosure of the Invention

### Problems to be solved by the Invention

In order to increase the rigidity and strength of the bearing apparatus it is necessary to assure the axial force (pressing force) applied to the inner ring 52. Although the axial force caused by the caulking process is different according to versions of bearing apparatus, it is necessary to set the amount of axial deformation displacement of the inner ring 52 in order to assure a predetermined axial force.

Conventionally the amount of caulking is managed in accordance with the amount of axial displacement of the caulking punch and it has been found that variation in the amount of axial deformation of the inner ring 52 is caused due to variations in the amount of caulking caused by dimensional variations in the hub wheel 51 even though the axial displacement of the caulking punch is kept at a constant amount. Accordingly, although it is preferable to set the range of amount of axial deformation of the inner ring 52 in consideration of the amount of the axial deformation of the inner ring by which a predetermined axial force can be assured and of variations in the amount of caulking, it cannot help setting the amount of the axial deformation of the inner ring 52 with carrying out caulking tests in accordance with the versions of bearing apparatus since apparent method of setting the amount of axial deformation of the inner ring 52 has not been established yet.

When the limit of the amount of axial deformation of the inner ring 52 is smaller than a predetermined value, the inner ring 52 cannot be axially deformed although it would be strongly caulked as well as only the thickness of the caulked portion 51c of the hub wheel 51 is reduced and thus the strength of the caulked portion is also reduced. On the contrary, when the caulking is carried out at a caulking load larger than a predetermined caulking load, the amount of axial deformation of the inner ring 52 can be slightly increased, however, the caulking punch would be caused a premature abrasion or cracks by the excessive load and thus the working efficiency would be largely reduced. Document JP 2004-90839 A discloses a bearing device for a wheel according to the preamble of claim 1.

### SUMMARY OF THE INVENTION

It is therefore an object of the present invention to provide a bearing apparatus for a wheel of vehicle which has an optimized amount of axial deformation of an inner ring caused by caulking process and thus can assure the axial force and fastening strength in order to improve the strength and rigidity of the bearing apparatus.

### Means for solving problems

For achieving the object above, there is provided, according to the present invention of claim 1, a bearing apparatus for a wheel of vehicle comprising: an outer member formed on its inner circumferential surface with double row outer raceway surfaces; an inner member including a hub wheel having a wheel mounting flange formed integrally therewith at one end thereof and a cylindrical portion axially extending from the wheel mounting flange, and an inner ring press fitted on the cylindrical portion formed on its outer circumferential surface with one of double row inner raceway surfaces arranged oppositely to one of the double row outer raceway surfaces; double row rolling elements contained and held by cages freely rollably between the double row outer raceway surfaces of the outer member and the double row inner raceway surfaces of the inner member; and wherein an end face at the outboard side of the inner ring is adapted to be abutted to a stepped portion formed on the hub wheel and the inner ring is secured on the hub wheel with being sandwiched between a caulked portion formed by plastically deforming radially outward an end at the inboard side of the cylindrical portion of the hub wheel and the stepped portion of the hub wheel characterized in that: the ratio of the thickness of an end at the outboard side of the inner ring to be abutted to the stepped portion relative to the inner diameter of the inner ring is limited at or smaller than 0.20.

In the bearing apparatus for a wheel of vehicle of so-called the self-retain structure wherein the inner ring is press fitted on the cylindrical portion of the hub wheel, and the inner ring is axially secured relative to the hub wheel by the caulked portion formed by plastically deforming radially outward the end of the cylindrical portion of the hub wheel, since a ratio of the thickness of an end at the outboard side of the inner ring to be abutted to the stepped portion relative to the inner diameter of the inner ring is limited within a predetermined value, it is possible to obtain a desirable axial force and strength of the caulked portion as well as to prevent generation of premature abrasion and cracks of the caulking punch.

Preferably the ratio of the thickness of the end to be abutted of the inner ring relative to its inner diameter may be set at or smaller than 0.20 as defined in claim 1. This makes it possible not only to assure a desirable axial force and strength of the caulked portion but to reduce fraction defective and to extend the life of tools such as jig etc.

Further it is preferable that the ratio of the thickness of the end to be abutted of the inner ring relative to its inner diameter may be set at or larger than 0.05 as defined in claim 2. This prevents excessive reduction of the area of flat end face of smaller end of the inner ring and thus its bearing pressure and assures the rigidity of the inner ring.

According to claim 3 of the present invention, the hub wheel is made of medium carbon steel including carbon of 0.40 - 0.80% by weight; said one of the inner raceway surfaces is directly formed on the outer circumferential surface of the hub wheel; the outer circumferential surface of the hub wheel in a region from the inner raceway surface to the cylindrical portion is hardened as having surface hardness of 58 - 64 HRC by high frequency induction hardening; the caulked portion is remained as a non-quenched portion having surface hardness less than 25 HRC after its forging; and the inner ring is made of high carbon chrome bearing steel and hardened to its core by dipping quenching as having surface hardness of 58 ∼ 64 HRC. This makes it possible to prevent generation of cracks or damages in the caulked portion during caulking process and to prevent excessive enlargement of the inner diameter of inner ring which would give influence to pre-pressure and durability in rolling fatigue.

### Effect of the Invention

The bearing apparatus for a wheel of vehicle of the present invention comprises: an outer member formed on its inner circumferential surface with double row outer raceway surfaces; an inner member including a hub wheel having a wheel mounting flange formed integrally therewith at one end thereof and a cylindrical portion axially extending from the wheel mounting flange, and an inner ring press fitted on the cylindrical portion formed on its outer circumferential surface with one of double row inner raceway surfaces arranged oppositely to one of the double row outer raceway surfaces; double row rolling elements contained and held by cages freely rollably between the double row outer raceway surfaces of the outer member and the double row inner raceway surfaces of the inner member; and wherein an end face at the outboard side of the inner ring is adapted to be abutted to a stepped portion formed on the hub wheel and the inner ring is secured on the hub wheel with being sandwiched between a caulked portion formed by plastically deforming radially outward an end at the inboard side of the cylindrical portion of the hub wheel and the stepped portion of the hub wheel and is characterized in that: a ratio of the thickness of an end at the outboard side of the inner ring to be abutted to the stepped portion relative to the inner diameter of the inner ring is limited at or smaller than 0.20. Thus it is possible to obtain a desirable axial force and strength of the caulked portion as well as to prevent generation of premature abrasion and cracks of the caulking punch.

### Best mode for carrying out the Invention

The best mode for carrying out the present invention is a bearing apparatus for a wheel of vehicle comprising: an outer member integrally formed on its outer circumferential surface with a body mounting flange and also formed on its inner circumferential surface with double row outer raceway surfaces; an inner member including a hub wheel having a wheel mounting flange formed integrally therewith at one end thereof and a cylindrical portion axially extending from the wheel mounting flange, and an inner ring press fitted on the cylindrical portion formed on its outer circumferential surface with one of double row inner raceway surfaces arranged oppositely to one of the double row outer raceway surfaces; double row rolling elements contained and held by cages freely rollably between the double row outer raceway surfaces of the outer member and the double row inner raceway surfaces of the inner member; and wherein an end face at the outboard side of the inner ring is adapted to be abutted to a stepped portion formed on the hub wheel and the inner ring is secured on the hub wheel with being sandwiched between a caulked portion formed by plastically deforming radially outward an end at the inboard side of the cylindrical portion of the hub wheel and the stepped portion of the hub wheel characterized in that: a ratio of the thickness of an end at the outboard side of the inner ring to be abutted to the stepped portion relative to the inner diameter of the inner ring is limited at or smaller than 0.20.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal section view showing a first embodiment of the bearing apparatus for a wheel of the present invention;
Fig. 2 is a graph showing a relation between the dimensional ratio of inner ring and the amount of axial deformation thereof needed to assure a desired axial force;
Fig. 3 is a graph showing a relation between the dimensional ratio of inner ring and the limit of amount of axial deformation of inner ring; and
Fig. 4 is a longitudinal section view showing a bearing apparatus for a wheel of vehicle of the prior art.

### DESCRIPTION OF THE PREFERRED EMBODIMENTS

### Preferred embodiment

One preferred embodiment of the present invention will be described in detail with reference to accompanying drawings.

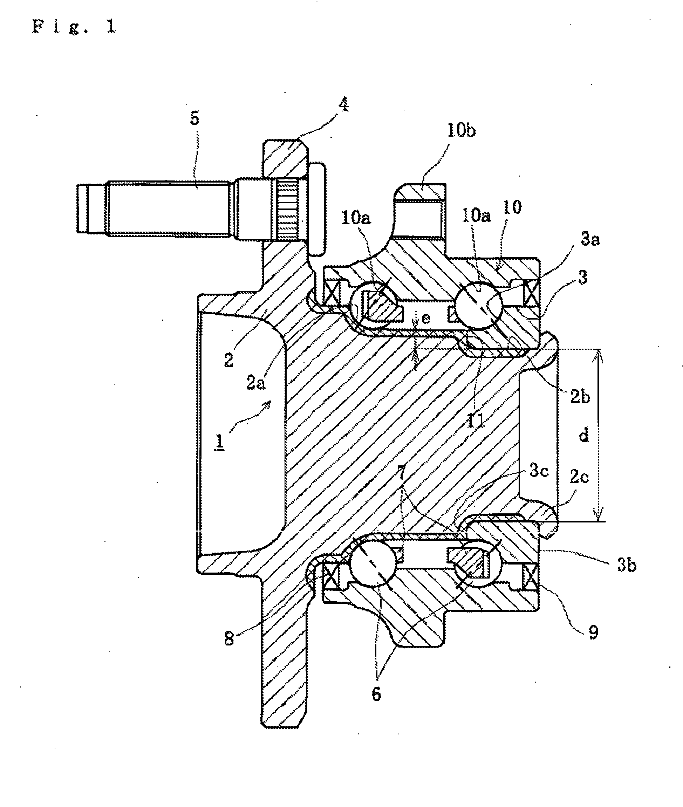

Fig. 1 shows a first embodiment of a bearing apparatus for a wheel of vehicle of the present invention. In the description below, a term "outboard side" of the apparatus denotes a side which is positioned outside (the left hand side) of the vehicle body and a term "inboard side" of the apparatus denotes a side which is positioned inside (the right hand side) of the body when the bearing apparatus is mounted on the vehicle body.

The illustrated bearing apparatus for a wheel of vehicle is so-called the third generation type at a driven wheel side and comprises an inner member 1, an outer member 10 and double row rolling elements (balls) 6, 6 retained freely rollably between the inner and outer members 1, 10. The inner member 1 comprises a hub wheel 2 and an inner ring 3 press-fitted on the hub wheel 2 via a predetermined interference.

The hub wheel 2 is integrally formed with a wheel mounting flange 4 for mounting a wheel (not shown) on its outer peripheral surface at the end of outboard side. Hub bolts 5 for securing the wheel on the flange 4 are equidistantly arranged along the periphery of the flange 4. The hub wheel 2 is also formed on its outer circumferential surface with one inner raceway surface 2a of the outboard side and has a cylindrical portion 2b axially extending from the inner raceway surface 2a through a stepped (shoulder) portion 11. The inner ring 3 is press fitted on the cylindrical portion 2b and formed on its outer circumferential surface with the other inner raceway surface 3a of the inboard side.

A caulked portion 2c is formed by plastically deforming the end portion of the cylindrical portion 2b (cylindrical projection) radially outward with keeping the smaller end face 3c of the inner ring 3 being abutted to the stepped portion 11 of the hub wheel 2. Thus the inner ring 3 is secured relative to the hub wheel 2 with being sandwiched between the caulked portion 2c and the stepped portion 11 of the hub wheel 2. The caulked portion 2c can be plastically deformed with being tightly contacted with the inboard side outline of the inner ring 3 and thus can assure a desired axial force on the inner ring 3 with pressing the larger end face 3b of the inner ring 3.

The outer member 10 is integrally formed on its outer circumferential surface with a body mounting flange 10b to be mounted on a body (not shown) of vehicle and is also formed on its inner circumferential surface with double row outer raceway surfaces 10a, 10a. Double row rolling elements 6, 6 are freely rollably held by cages 7, 7 between the outer and inner raceway surfaces 10a, 10a; 2a, 3a. Seals 8, 9 are arranged at the ends of the outer member 10 to prevent leakage of lubricating grease contained within bearing as well as ingress of rain water or dusts from outside.

Although the illustrated bearing apparatus is so-called third generation type in which the inner raceway surface 2a is directly formed on the outer circumferential surface of the hub wheel 2, the present invention is not limited thereto and can be applied to the first and second generation types in which one pair of inner rings are press-fitted on the cylindrical portion of the hub wheel. In addition, although the illustrated bearing apparatus uses the double row angular ball bearing, the present invention can be also applied to other bearing e.g. double row tapered roller bearing using tapered rollers as the rolling elements. In addition, the present invention can be also applied to a bearing apparatus used for a driving wheel of vehicle in which a hub wheel is formed with a through bore for inserting therethrough a stem shaft of a constant velocity universal joint.

The hub wheel 2 is made of medium carbon steel including carbon of 0.40 - 0.80% by weight such as S53C and hardened as having surface hardness of 58 - 64 HRC by high frequency induction hardening at the inner raceway surface 2a of the outboard side (shown by cross-hatching lines), a seal land portion with which the seal 8 contacts, and the axially extending cylindrical portion 2b. The caulked portion 2c is remained as a non-quenched portion having a surface hardness less than 25 HRC after its forging. The inner ring 3 is made of high carbon chrome bearing steel such as SUJ2 and is hardened to its core by dipping quenching to have a surface hardness of 58 - 64 HRC.

Similarly to the hub wheel 2, the outer member 10 is made of medium carbon steel including carbon of 0.40 - 0.80% by weight such as S53C and its double row outer raceway surfaces 10a, 10a are hardened by high frequency induction quenching to have a surface hardness of 58 - 64 HRC.

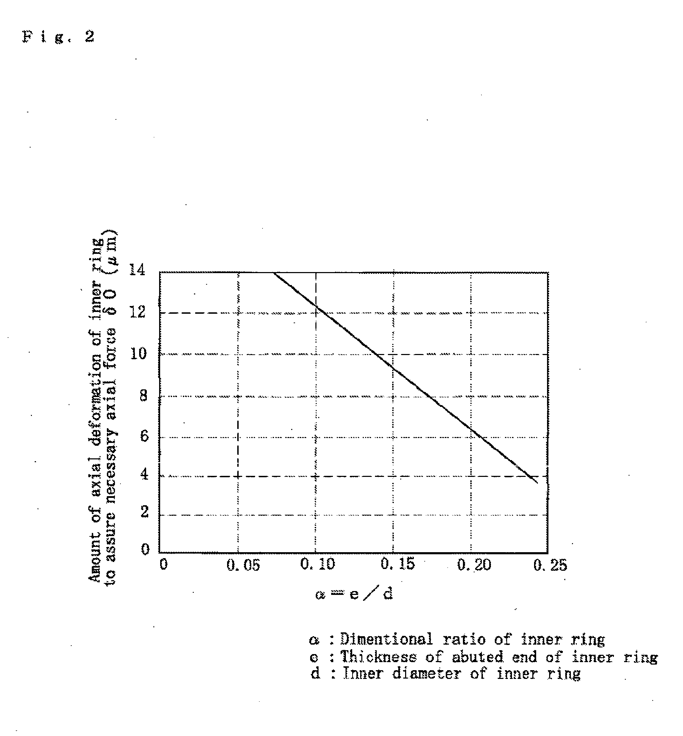

The applicant has noticed a relation between the amount of axial deformation and the rigidity of the inner ring 3, that is a relation between the amount of axial deformation and the configuration/dimension of the inner ring 3 and made samples of inner rings of several versions to carry out caulking tests. As the result of which it has been found, as shown in Fig. 2, that there is a constant correlation between a ratio "α" (hereinafter referred to as "dimensional ratio of inner ring") of the thickness "e" of the end (i.e. the smaller end 3c at the outboard side of the inner ring 3) to be abutted to the stepped portion 11 relative to the inner diameter "d" and the amount "δ 0" of axial deformation of inner ring 3 to assure the necessary axial force. As can be seen from Fig. 2, it is possible to determine the amount "δ 0" (the lower limit value of which is 6 - 7 µm) of axial deformation of inner ring to assure the necessary axial force (set at 20 kN herein) by setting the dimensional ratio "α" of inner ring at or smaller than 0.20.

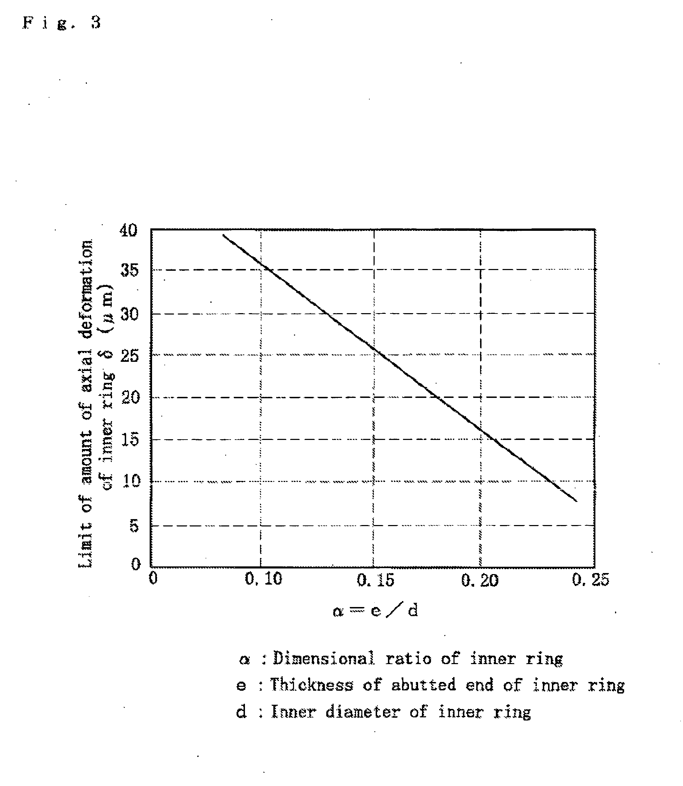

On the other hand the amount of caulking is dispersed due to variations of dimensional accuracy of the hub wheel 2 and the inner ring 3 before the caulking process even though the amount of axial displacement of the caulking punch is set constant and thus the amount of deformation of the inner ring 3 is also varied. It has been found from results of the tests that it is necessary to anticipate at least 10 µm as the fluctuating value. Accordingly the limit of amount of axial deformation of inner ring "δ" was set by adding the fluctuating value (10 µm) of the amount of axial deformation of inner ring to the amount "δ 0" of axial deformation of inner ring in order to assure said necessary axial force. Fig. 3 shows a relation between the limit of amount of axial deformation of inner ring "δ" and the dimensional ratio of inner ring "α".

According to the present invention, it is possible to easily determine the limit of amount of axial deformation of inner ring "δ" in caulking process from the dimension of the inner ring 3 based upon the relation between the limit of amount of axial deformation of inner ring "δ" and the dimensional ratio of inner ring "α". Thus it is possible to obtain a desirable axial force and strength of the caulked portion 2c and to prevent generation of premature abrasion and cracks of the caulking punch.

According to the present invention, it is possible not only to assure a desirable axial force and strength of the caulked portion 2c but to reduce fraction defective and to extend the life of tools such as jig etc. when the dimensional ratio of inner ring "α" is set at or smaller than 0.20. When the dimensional ratio of inner ring "α" is at or smaller than 0.05, it is afraid that the thickness "e" of the abutted end of inner ring 3 and thus the area of its flat face would be excessively reduced and the bearing pressure would be excessively increased. Accordingly it is possible according to the present invention to provide a bearing apparatus for a wheel of vehicle which has an optimized amount of axial deformation of an inner ring caused by caulking process and thus can assure the axial force and fastening strength in order to improve the strength and rigidity of the bearing apparatus by setting the dimensional ratio of inner ring "α" within a range of 0.05 - 0.20.

### Applicability in industry

The bearing apparatus for a wheel of vehicle of the present invention can be applied to those of first - third generation types having a self-retaining structure in which the inner ring(s) is press fitted on the cylindrical portion of the hub wheel and secured thereon by the caulked portion formed by plastically deforming the end of the cylindrical portion of the hub wheel.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

## Claims

1. A bearing apparatus for a wheel of vehicle comprising:
- an outer member (10) formed on its inner circumferential surface with double row outer raceway surfaces (10a, 10a);
- an inner member (1) including a hub wheel (2) having a wheel mounting flange (4) formed integrally therewith at one end thereof and a cylindrical portion (2b) axially extending from the wheel mounting flange (4), and an inner ring (3) press fitted on the cylindrical portion (2b) formed on its outer circumferential surface with one of double row inner raceway surfaces (2a, 3a) arranged oppositely to one of the double row outer raceway surfaces (10a, 10a)
- double row rolling elements (6, 6) contained and held by cages (7, 7) freely rollably between the double row outer raceway surfaces (10a, 10a) of the outer member (10) and the double row inner raceway surfaces (2a, 3a) of the inner member (1); and
- wherein an end face at the outboard side of the inner ring (3) is adapted to be abutted to a stepped portion (11) formed on the hub wheel (2) and the inner ring (3) is secured on the hub wheel (2) with being sandwiched between a caulked portion (2c) formed by plastically deforming radially outward an end at the inboard side of the cylindrical portion (2b) of the hub wheel (2) and the stepped portion (11) of the hub wheel (2) **characterized in that**:
- the ratio (α) of the thickness (e) of an end (3c) at the outboard side of the inner ring (3) to be abutted to the stepped portion (11) relative to the inner diameter (d) of the inner ring (3) is limited at or smaller than 0.20.

2. A bearing apparatus for a wheel of vehicle of claim 1 wherein the ratio (α) of the thickness (e) of the end (3c) to be abutted of the inner ring (3) relative to its inner diameter (d) is set at or larger than 0.05.

3. A bearing apparatus for a wheel of vehicle of claim 1 or claim 2 wherein the hub wheel (2) is made of medium carbon steel including carbon of 0.40 - 0.80% by weight; said one of the inner raceway surfaces (2a) is directly formed on the outer circumferential surface of the hub wheel (2); the outer circumferential surface of the hub wheel (2) in a region from the inner raceway surface (2a) to the cylindrical portion (2b) is hardened as having surface hardness of 58 - 64 HRC by high frequency induction hardening; the caulked portion (2c) is remained as a non-quenched portion having surface hardness less than 25 HRC after its forging; and the inner ring (3) is made of high carbon chrome bearing steel and hardened to its core by dipping quenching as having surface hardness of 58 - 64 HRC.

## Patentansprüche

1. Lagervorrichtung für ein Rad eines Fahrzeugs, die Folgendes umfasst:
- ein äußeres Element (10), das an seiner Innenumfangsfläche mit doppelreihigen äußeren Laufringflächen (10a, 10a) geformt ist,
- ein inneres Element (1), umfassend eine Radnabe (2) mit einem Radmontageflansch (4), der integral mit derselben an einem Ende derselben geformt ist, und mit einem zylindrischen Abschnitt (2b), der sich in Axialrichtung von dem Radmontageflansch (4) aus erstreckt, und einen auf den zylindrischen Abschnitt (2b) aufgepressten inneren Ring (3), der auf seiner Außenumfangsfläche mit einer der doppelreihigen inneren Laufringflächen (2a, 3a) geformt ist, welche gegenüber einer der doppelreihigen äußeren Laufringflächen (10a, 10a) angeordnet ist,
- doppelreihige Wälzelemente (6, 6), die durch Käfige (7, 7) frei wälzbar zwischen den doppelreihigen äußeren Laufringflächen (10a, 10a) des äußeren Elements (10) und den doppelreihigen inneren Laufringflächen (2a, 3a) des inneren Elements (1) umfasst und gehalten werden, und
- wobei eine Stirnfläche an der Außenseite des inneren Rings (3) dafür eingerichtet ist, an einen abgestuften Abschnitt (11) angestoßen zu werden, der in die Radnabe (2) geformt ist, und der innere Ring (3) an der Radnabe (2) befestigt ist, indem er zwischen einem durch das plastische Verformen eines Endes an der Innenseite des zylindrischen Abschnitts (2b) der Radnabe (2) in Radialrichtung nach außen geformten verstemmten Abschnitt (2c) und dem abgestuften Abschnitt (11) der Radnabe (2) eingeklemmt ist, **dadurch gekennzeichnet, dass**:
das Verhältnis (α) der Dicke (e) eines Endes (3c) an der Außenseite des inneren Rings (3), das an den abgestuften Abschnitt (11) anzustoßen ist, im Verhältnis zu dem Innendurchmesser (d) des inneren Rings (3) auf 0,20 oder kleiner begrenzt ist.

2. Lagervorrichtung für ein Rad eines Fahrzeugs nach Anspruch 1, wobei das Verhältnis (α) der Dicke (e) eines anzustoßenden Endes (3c) des inneren Rings (3) im Verhältnis zu dessen Innendurchmesser (d) auf 0,05 oder mehr festgesetzt ist.

3. Lagervorrichtung für ein Rad eines Fahrzeugs nach Anspruch 1 oder Anspruch 2, wobei die Radnabe (2) aus Stahl mit mittlerem Kohlenstoffgehalt hergestellt ist, der 0,40 - 0,80 Gew.-% Kohlenstoff umfasst, wobei die eine der inneren Laufringflächen (2a) unmittelbar auf der Außenumfangsfläche der Radnabe (2) geformt ist, wobei die Außenumfangsfläche der Radnabe (2) in einem Bereich von der inneren Laufringfläche (2a) bis zu dem zylindrischen Abschnitt (2b) durch Hochfrequenz-Induktionshärten gehärtet ist, um eine Oberflächenhärte von 58 - 64 HRC zu haben, wobei der verstemmte Abschnitt (2c) belassen ist als ein nicht abgeschreckter Abschnitt, der nach seinem Schmieden eine Oberflächenhärte von weniger als 25 HRC hat, und wobei der innere Ring (3) aus Lager-Chromstahl mit hohem Kohlenstoffgehalt hergestellt und durch Tauchabschrecken bis zu seinem Kern gehärtet ist, um eine Oberflächenhärte von 58 - 64 HRC zu haben.

## Revendications

1. Dispositif de roulement pour une roue de véhicule, comprenant :
- un élément extérieur (10), présentant sur sa circonférence intérieure, des surfaces extérieures de piste de roulement à double gorge (10a, 10a) ;
- un élément intérieur (1), comprenant un moyeu de roue (2) ayant une bride de montage de la roue (4), formée de manière solidaire avec celui-ci, sur une de ses extrémités, et une partie cylindrique (2b), s'étendant axialement depuis la bride de montage de la roue (4), et un anneau intérieur (3) ajusté par pression sur la partie cylindrique (2b) formée sur sa circonférence extérieure, chacune des surfaces intérieures de piste de roulement à double gorge (2a, 3a) étant disposées de manière opposée à chacune des surfaces extérieures de piste de roulement à double gorge (10a, 10a) ;
- des éléments de roulement à double gorge (6, 6), présents dans et maintenus par des cages (7, 7), pouvant rouler librement entre les surfaces de piste de roulement à double gorge (10a, 10a) de l'élément extérieure (10) et les surfaces intérieures de piste de roulement à double gorge (2a, 3a) de l'élément interne (1), et
- où une face terminale sur le côté extérieur de l'anneau intérieur (3) est adaptée pour s'appuyer sur une partie à gradins (11) formée sur le moyeu de roue (2) et l'anneau intérieur (3) est fixé sur le moyeu (2) en étant pris en sandwiche entre une partie calfeutrée (2c) formée par déformation plastique, de manière radiale vers l'extérieur, d'une extrémité sur la face intérieure de la partie cylindrique (2b) du moyeu (2) et la partie à gradins (11) du moyeu (2), **caractérisé en ce que** :
- le rapport (α) de l'épaisseur (e) d'une extrémité (3c) sur le côté extérieur de l'anneau intérieur (3), à appuyer sur la partie en gradins (11), par rapport au diamètre interne (d) de l'anneau intérieur (3) est limité à ou inférieur à 0,20.

2. Dispositif de roulement pour une roue de véhicule selon la revendication 1, où le rapport (α) de l'épaisseur (e) de l'extrémité (3c) à appuyer sur l'anneau intérieur (3), par rapport à son diamètre interne (d) est réglé à ou supérieur à 0,05.

3. Dispositif de roulement pour une roue de véhicule selon la revendication 1 ou 2, où le moyeu (2) est composé d'acier au carbone moyen, comprenant 0,40-0,80% en poids de carbone ; l'une des surfaces intérieures des pistes de roulement (2a) étant directement formée sur la circonférence extérieure du moyeu (2) ; la circonférence extérieure du moyeu (2) dans une région allant de la surface intérieure de la piste de roulement (2a) à la partie cylindrique (2b) est durcie pour avoir une dureté de surface de 58-64 HRC par durcissement par induction à haute fréquence ; la partie calfeutrée (2c) est restée en tant que partie non traitée avec une dureté de surface inférieure à 25 HRC après son forgeage ; et l'anneau intérieur (3) est composé d'acier à teneur élevée en carbone et à teneur en chrome, et est durci en son coeur par traitement par immersion avec une dureté de surface de 58-64 HRC.
